# EUROPEAN PATENT APPLICATION

(11) **EP 2 658 334 A2**
(43) Date of publication of application: **30.10.2013**
(21) Application number: 12192843.6
(22) Date of filing: 15.11.2012
(51) Int. Cl.: H04W 76/02, G06F 13/12, H04W 84/12

(54) **Wireless connection system, wireless connection control method, and wireless connection control program**

(30) Priority: 23.04.2012 JP 2012098257
(71) Applicant: Kabushiki Kaisha Toshiba, Tokyo 105-8001 (JP)
(72) Inventor: Kito, Toshiyuki, Tokyo, 105-8001 (JP)
(74) Representative: Henkel, Breuer & Partner

(57) **Abstract**

According to one embodiment, a wireless connection system includes: a first electronic device and a second electronic device configured to be wirelessly connected to the first electronic device, the first electronic device including: a connection item presenting module configured to present a connection item enabling a connection to the second electronic device; and a command sending module configured to send out a command to be used for a connection to the second electronic device when the connection item is designated; an access point which relays the command received from the first electronic device to the second electronic devices, wherein the second electronic device receives the relayed command, activates a second access point using a key that is indicated by the command, and is wirelessly connected to the first electronic device after the activation of the second access point.

## Description

### CROSS REFERENCE TO RELATED APPLICATION(S)

The application is based upon and claims the benefit of priority from Japanese Patent Application No. 2012-098257 filed on April 23, 2012, the entire contents of which are incorporated herein by reference.

### BACKGROUND

### 1. Field

The present invention relates to a wireless connection system, a wireless connection control method, and a wireless connection control program.

### 2. Description of the Related Art

The wireless connection control technique "Wi-Fi Direct" for direct connection between electronic devices has been proposed recently. The Wi-Fi Direct is a specification that was established by the Wi-Fi Alliance which is an organization for promoting the spread of wireless LAN as typified by Wi-Fi.

The Wi-Fi Direct is a technique which makes it possible to wirelessly connect wireless-LAN-compatible electronic devices (e.g., cell phone, personal computer (PC), tablet PC, digital camera, printer, portable game machine) to each other even without using an access point.

### BRIEF DESCRIPTION OF THE DRAWINGS

A general configuration that implements the various features of embodiments will be described with reference to the drawings. The drawings and the associated descriptions are provided to illustrate embodiments and not to limit the scope of the embodiments.
Fig. 1 outlines a wireless connection system according to an embodiment.
Fig. 2 is a block diagram showing an example configuration of a tablet PC which is a connection-source-side electronic device used in the wireless connection system according to the embodiment.
Fig. 3 is a block diagram showing an example configuration of a TV receiver which is a connection-destination-side electronic device used in the wireless connection system according to the embodiment.
Fig. 4 is a functional block diagram of the tablet PC.
Fig. 5 is a functional block diagram of the TV receiver.
Fig. 6 illustrates how the wireless connection system according to the embodiment operates.
Fig. 7 is a flowchart of a main process which is executed by the tablet PC.
Fig. 8 is a flowchart of a main process which is executed by the TV receiver.
Fig. 9 is a flowchart of a process which is executed by the wireless connection system according to the embodiment.

### DETAILED DESCRIPTION

An embodiment will be hereinafter described with reference to the drawings.

According to one embodiment, a wireless connection system includes : a first electronic device and a second electronic device configured to be wirelessly connected to the first electronic device, the first electronic device including: a connection item presenting module configured to present a connection item enabling a connection to the second electronic device; and a command sending module configured to send out a command to be used for a connection to the second electronic device when the connection item is designated; an access point which relays the command received from the first electronic device to the second electronic device, wherein the second electronic device receives the relayed command, activates a second access point using a key that is indicated by the command, and is wirelessly connected to the first electronic device after the activation of the second access point.

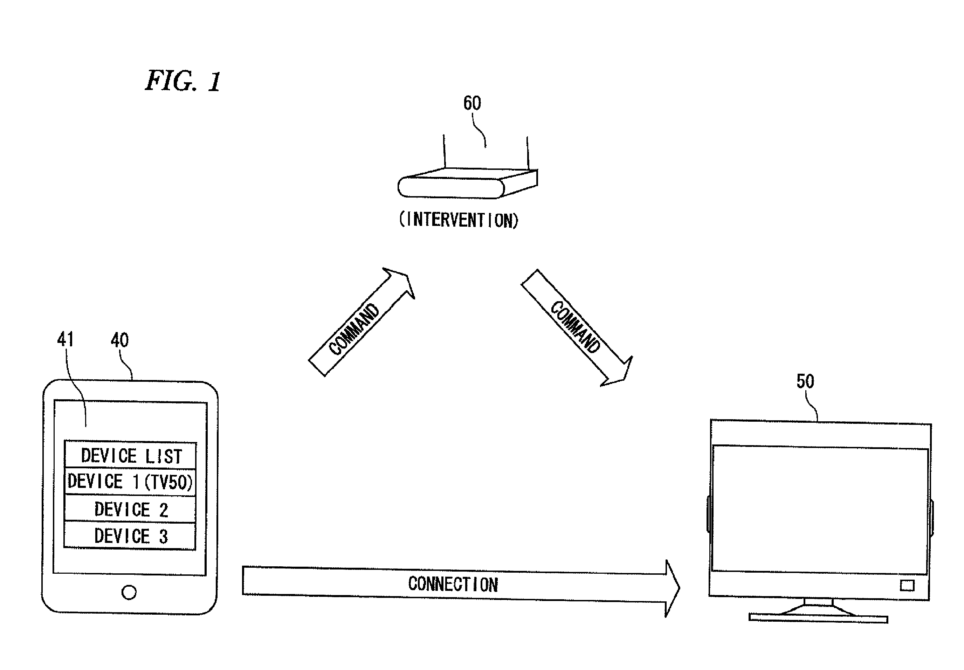

Fig. 1 outlines a wireless connection system according to the embodiment.

The "Peer-to-Peer" (P2P) is one of architectures for communication between many terminals and is a technique relating to a communication scheme for communication between equal-level partners (peers).

On the other hand, the "Wi-Fi Direct" is a P2P communication scheme for direct connection between Wi-Fi-compatible devices. However, to establish a Wi-Fi Direct connection, the users of electronic devices concerned need to command a communication start by pushing buttons (including a SW button) provided thereon so that each electronic device finds a connectible partner device and the electronic devices are authenticated mutually. This raises a problem that a considerable time is taken to complete a wireless connection.

To solve the above problem, in the embodiment, as shown in Fig. 1, an electronic device 40 which is a tablet PC and an electronic device 50 which is a TV receiver are configured so as to be able to connect to each other wirelessly via an access point (AP) 60. A P2P connection (wireless connection) is established between the tablet PC 40 and the TV receiver 50 from this state.

In the embodiment, a user manipulates one device (tablet PC 40) and thereby selects or designates the other device (e.g., TV receiver 50) which is displayed on a display module 41 of the tablet PC 40 and to which he or she wants to establish a P2P wireless connection.

When the TV receiver 50 is selected or designated, the tablet PC 40 sends a command to the TV receiver 50 via the access point 60. As a result, the TV receiver 50 is caused to operate as a second access point (a key that is preset in the TV receiver 50 is used). Thus, the time taken to complete a connection is shortened.

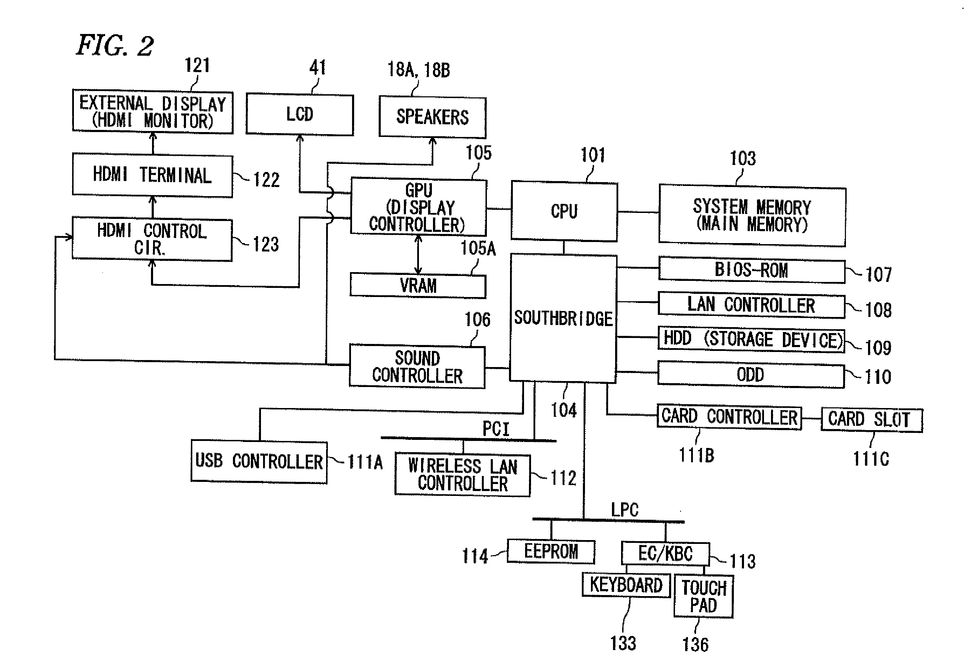

Fig. 2 is a block diagram showing an example configuration of the tablet PC 40 which is a connection-source-side electronic device used in the wireless connection system according to the embodiment.

As shown in Fig. 2, the tablet PC 40 is equipped with a CPU (central processing module) 101, a system memory (main memory) 103, a southbridge 104, a GPU (graphics processing module) 105, a VRAM (video random access memory) 105A, a sound controller 106, a BIOS-ROM (basic input/output system-read only memory) 107, a LAN (local area network) controller 108, a hard disk drive (HDD; storage device) 109, an optical disc drive (ODD) 110, a USB controller 111A, a card controller 111B, a card slot 111C, a wireless LAN controller 112, an embedded controller/keyboard controller (EC/KBC) 113, an EEPROM (electrically erasable programmable ROM) 114, etc.

The CPU (SoC) 101 is a processor which controls operations of individual components of the tablet PC 40. The CPU 101 runs a BIOS which is stored in the BIOS-ROM 107. The BIOS is programs for hardware control. The CPU 101 incorporates a memory controller for access-controlling the systemmemory (mainmemory) 103. The CPU 101 also has a function of performing a communication with the GPU 105 via, for example, a serial bus that complies with the PCI Express standard.

The GPU 105 is a display controller which controls the display module (LCD) 41 which is used as a display monitor of the tablet PC 40. A display signal generated by the GPU 105 is sent to the display module (LCD) 41. The GPU 105 can also send a digital video signal to an external display 121 via an HDMI control circuit 123 and an HDMI terminal 122.

The HDMI terminal 122 is an external display connection terminal. The HDMI terminal 122 can send a non-compressed digital video signal and digital audio signal to the external display 121 such as a TV receiver via a single cable. The HDMI control circuit 123 is an interface for sending a digital video signal to the external display 121 (called an HDMI monitor) via the HDMI terminal 122.

The southbridge 104 controls the individual devices on a PCI (peripheral component interconnect) bus and the individual devices on an LPC (low pin count) bus. The southbridge 104 incorporates an IDE (integrated drive electronics) controller for controlling the HDD 109 and the ODD 110. The southbridge 104 also has a function of performing a communication with the sound controller 106.

The sound controller 106, which is a sound source device, outputs reproduction subject audio data to speakers 18A and 18B or the HDMI control circuit 123. The LAN controller 108 is a wired communication device which performs a wired communication according to the IEEE 802.3 standard, for example. On the other hand, the wireless LAN controller 112 is a wireless communication device which performs a wireless communication according to the IEEE 802.11g standard, for example.

The USB controller 111A performs a communication with an external device which complies with the USB 2.0 standard, for example. For example, the USB controller 111A is used for receiving an image data file from a digital camera. The card controller 111B writes and reads data to and from a memory card such as an SD card that is inserted in a card slot that is formed in a computer main body 11.

The EC/KBC 113 is a one-chip microcomputer in which an embedded controller for power management and a keyboard controller for controlling a keyboard 133 and a touch pad 136 are integrated together. The EC/KBC 113 has a function of powering on/off the tablet PC 40 in response to a user manipulation of a power button.

In the embodiment, for example, display control is performed in such a manner that the CPU 101 runs a program stored in the system memory 103 or the HDD 109, for example.

In the embodiment, an operating system (OS) is software which provides common basic functions (e.g., input/output functions such as keyboard input and screen output and disc/memory management) used by many kinds of application software and which manages the entire computer system. The OS is stored in the HDD 109, for example.

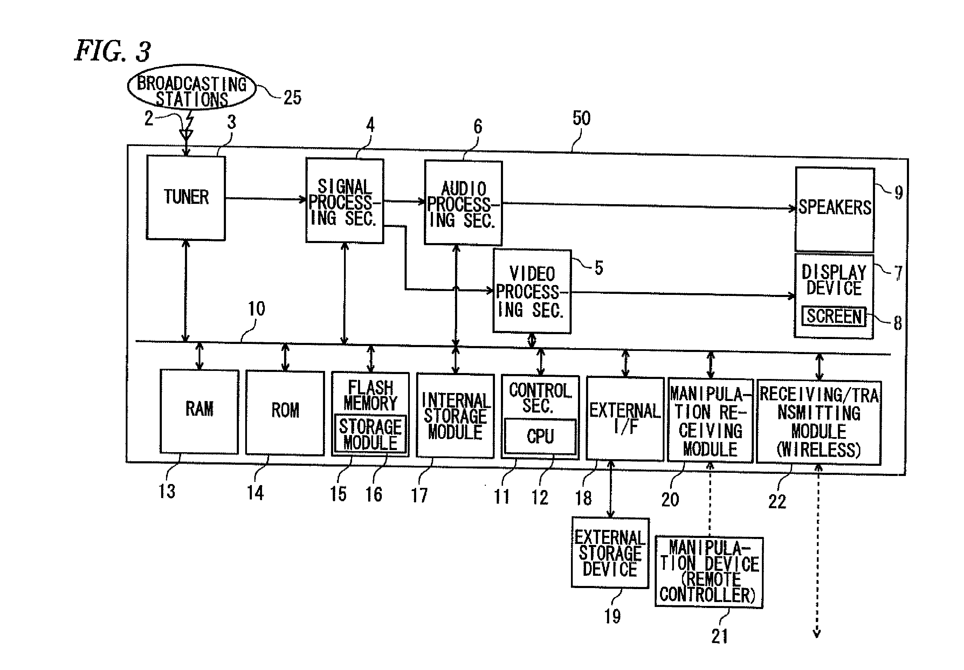

Fig. 3 is a block diagram showing an example configuration of the TV receiver 50 which is a connection-destination-side electronic device used in the wireless connection system according to the embodiment.

In the embodiment, a control module 11 is equipped with a CPU 12 which controls the TV receiver 50. A RAM 13, a ROM 14, and a flash memory 15 are used for processing that is performed by the control module 11, for example. The flash memory 15 can store information of devices that are set in the system and preset user information.

For example, video contents that are broadcast by broadcasting stations 25 are received by a tuner 3 and subjected to tuning processing there, and a resulting digital signal of a video content is supplied to a signal processing module 4. The signal processing module 4 performs signal processing on the received digital signal of the video content, and supplies resulting signals to an audio processing module 6 and a video processing module 5.

The audio processing module 6 performs audio processing on the received signal of the video content, and supplies resulting signals to speakers 9. The speakers 9 produce a sound on the basis of the received signals.

The video processing module 5 performs video processing on the received signal of the video content, and supplies a resulting signal to a display module 7. The display module 7 displays video on the screen 8 of an LCD panel, for example, on the basis of the received signal.

In the embodiment, the TV receiver 50 is equipped with an internal storage device 17. Like an external storage device 19, the internal storage device 17 can record all received broadcast programs and thereby enables time-shift reproduction.

In the embodiment, the TV receiver 50 is provided with the external storage device 19 which is USB or LAN-connected to the TV receiver 50. It is also possible to store a received in the external storage device 19.

A user manipulation is performed on the TV receiver 50 through a manipulation device such as a remote controller 21.

The above-described pieces of processing are controlled by the control module 11.

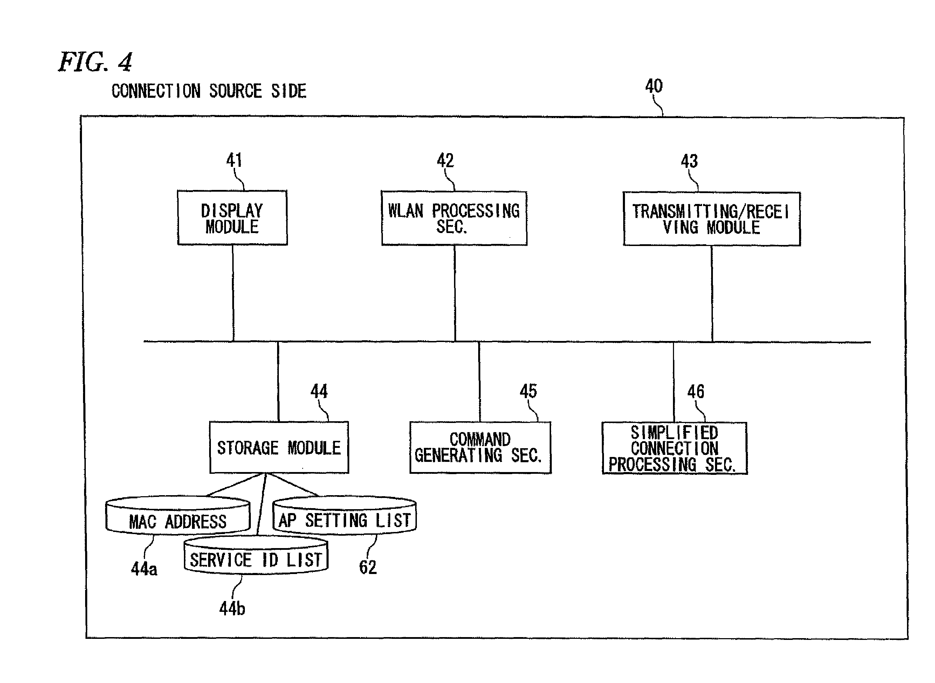

Fig. 4 is a functional block diagram of the tablet PC 40 which is a connection-source-side electronic device used in the wireless connection system according to the embodiment.

In the embodiment, as shown in Fig. 4, the tablet PC 40 is composed of the display module 41, a command generating module 45, a WLAN processing module 42, a storage module 44, and a simplified connection processing module 46.

Designations of electronic devices that can be connected to the tablet PC 40 are displayed on the display module 41. For example, a result of a scan for electronic devices that can be connected to the tablet PC 40 is displayed on the display module 41.

The command generating module 45 acquires a MAC address 44a that is stored in the storage module 44, and generates a command which is a combination of the acquired MAC address 44a and a service ID.

The transmitting/receiving module 43 performs data transmission and reception. The WLAN processing module 42 performs wireless LAN processing.

The storage module 44 is stored with a MAC address 44a, an AP setting list 62, and a service ID list 44b. The MAC address 44a is a list containing a MAC address of the tablet PC 40 itself. The AP setting list 62 is a list containing SSIDs and keys which are necessary to establish a wireless LAN connection.

For example, the SSID (service set identifier) is an identifier of an access point of a wireless LAN that complies with the IEEE 802.11 series. The SSID is a name which is used for avoiding interference and can be set arbitrarily using alphanumeric characters (32 characters at the maximum). An SSID as extended to a network identifier taking into consideration a network that is provided with plural access points are set is called an ESSID. An identifier that is actually an ESSID may be called an SSID.

The service ID list 44b is a list for binding service names and IDs, respectively.

The simplified connection processing module 46 operates to realize processing of the connection-source-side electronic device (tablet PC 40) of a simplified connection method according to the embodiment.

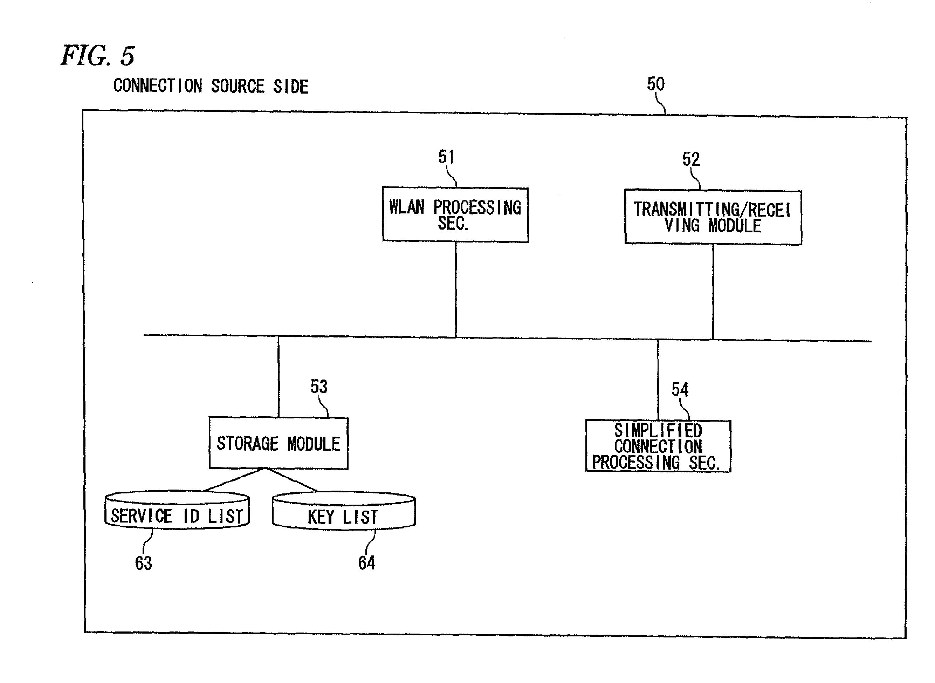

Fig. 5 is a functional block diagram of the TV receiver 50 which is a connection-destination-side electronic device used in the wireless connection system according to the embodiment.

In the embodiment, as shown in Fig. 5, the TV receiver 50 is composed of a transmitting/receiving module 52, a WAN processing module 51, a simplified connection processing module 54, and a storage module 53.

The transmitting/receiving module 52 performs data transmission and reception. The WAN processing module 51 performs WLAN processing. The simplified connection processing module 54 operates to realize processing of the connection-destination-side electronic device (TV receiver 50) of the simplified connection method according to the embodiment.

The storage module 53 is stored with a key list 64 and a service ID list 63. For example, the key list 64 is a list which holds combinations of information indicating a device to which the TV receiver 50 was connected in the past and a key that was used for a communication with that device.

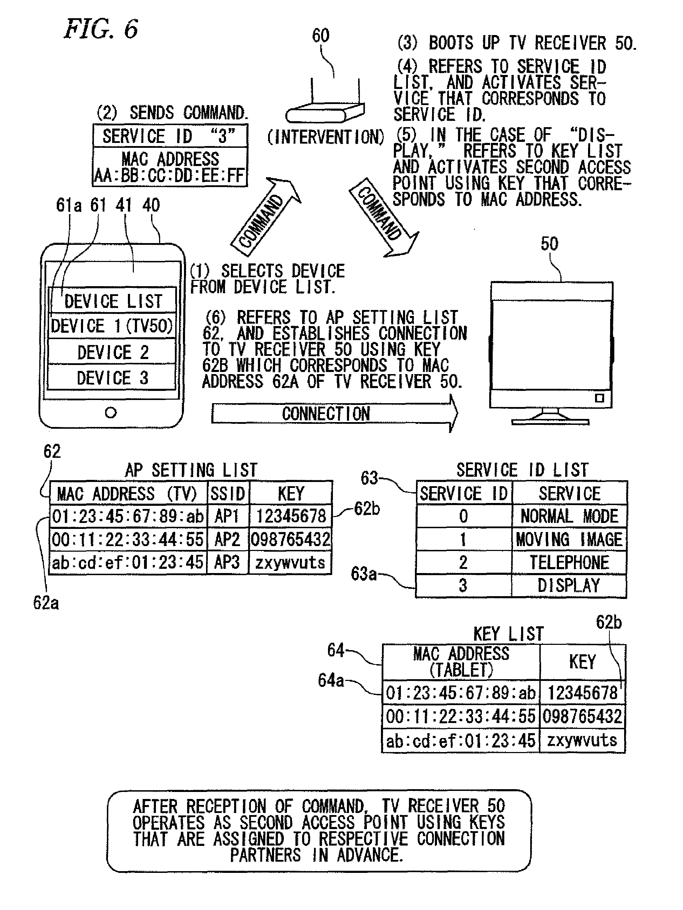

Fig. 6 illustrates how the wireless connection system according to the embodiment operates.

As shown in Fig. 6, in the embodiment, for example, an AP setting list 62 is stored in the EEPROM 114 of a first electronic device (tablet PC 40) in advance. Pieces of information of an electronic device (e.g., TV receiver 50) that can be set as a second access point, such as a MAC address, an SSID, and a key, are set in the AP setting list 62 in advance.

Wirelessly connectible second electronic devices are displayed on the display module 41 of the first electronic device (tablet PC 40) in such a manner that a connection to one of the displayed second electronic devices can be designated. For example, a device list 61 is displayed which includes wirelessly connectible electronic devices "device 1 (TV receiver 50)," "device 2," "device 3," etc. A desired electronic device is selected or designated by the user as a second electronic device.

If a connection to a desired second electronic device (e.g., TV receiver 50) is designated by the user, a command for that connection is output from the first electronic device (tablet PC 40). As show in Fig. 6, the command consists of a service ID "3" and a MAC address "aa:bb:cc:dd:ee:ff."

In the embodiment, the command that is output from the first electronic device (tablet PC 40) is received by the access point (AP) 60 and sent to the second electronic device (e.g., TV receiver 50). That is, the access point 60 relays, to the second electronic device (TV receiver 50), the command that is output from the first electronic device (tablet PC 40).

The second electronic device (TV receiver 50) receives the command relayed by the access point 60 and, for example, is booted up upon reception of the command.

In the second electronic device (TV receiver 50), the service ID list 63 stored in the flash memory 15, for example, is referred to and a service corresponding to the received service ID is activated.

In this example, a service name "display" corresponds to the service ID "3" 63a and the second electronic device (TV receiver 50) activates this service.

The first electronic device (tablet PC 40) refers to the AP setting list 62, and establishes a wireless connection to the second electronic device (TV receiver 50) using a key "12345678" 62b which corresponds to a MAC address "01:23:45:67:89:ab" 62a of the second electronic device (TV receiver 50).

In the embodiment, after reception of the command, the second electronic device (TV receiver 50) operates as a second access point using keys that are assigned to respective connection partners in advance.

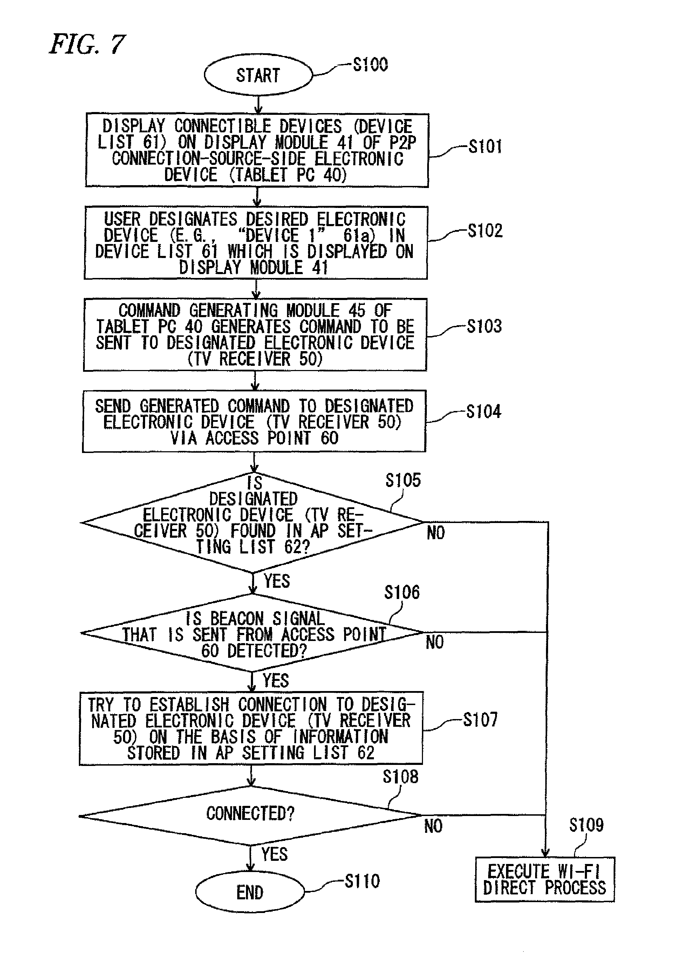

Fig. 7 is a flowchart of a main process which is executed by the tablet PC 40 which is a connection-source-side electronic device used in the wireless connection system according to the embodiment.

The process starts at step S100. At step S101, connectible devices are displayed on the display module 41 of the tablet PC 40 which is a P2P connection-source-side electronic device. For example, the device list 61 is displayed.

At step S102, the user designates a desired electronic device (e.g., "device 1" 61a) in the device list 61 which is displayed on the display module 41.

At step S103, the command generating module 45 of the tablet PC 40 generates a command to be sent to the designated electronic device ("device 1" which is the TV receiver 50).

At step S104, the generated command is sent to the designated electronic device (TV receiver 50) via the access point 60.

At step S105, it is judged whether or not the designated electronic device (TV receiver 50) is found in the AP setting list 62. If it is judged that the designated electronic device (TV receiver 50) is found in the AP setting list 62 (S105: yes), the process moves to step S106. If not (S105: no), the process moves to step S109.

At step S106, the tablet PC 40 tries to detect a beacon signal that is sent from the access point 60. If a beacon signal is detected (S106: yes), the process moves to step S107. If not (S106: no), the process moves to step S109.

A beacon signal (packets) is sent from a wireless LAN access point. For example, a computer having a wireless LAN adapter can detect a usable wireless LAN network by receiving such a beacon signal.

At step S107, the tablet PC 40 as the first electronic device establishes a connection to the designated electronic device (TV receiver 50, second electronic device) on the basis of information stored in the AP setting list 62.

At step S108, the tablet PC 40 judges whether or not it has been connected to the designated electronic device (TV receiver 50). If it is judged that the tablet PC 40 has been connected to the designated electronic device (TV receiver 50) (S108: yes), the process moves to step S110. If not (S108: no), the process moves to step S109.

At step S109, a Wi-Fi Direct process is executed. In the embodiment, if, for example, a certain electronic device tries to establish a connection to a device that does not support the above-described wireless connection method according to the embodiment, the Wi-Fi Direct process is executed, which prevents an event that no wireless connection is established. The process is finished at step S110.

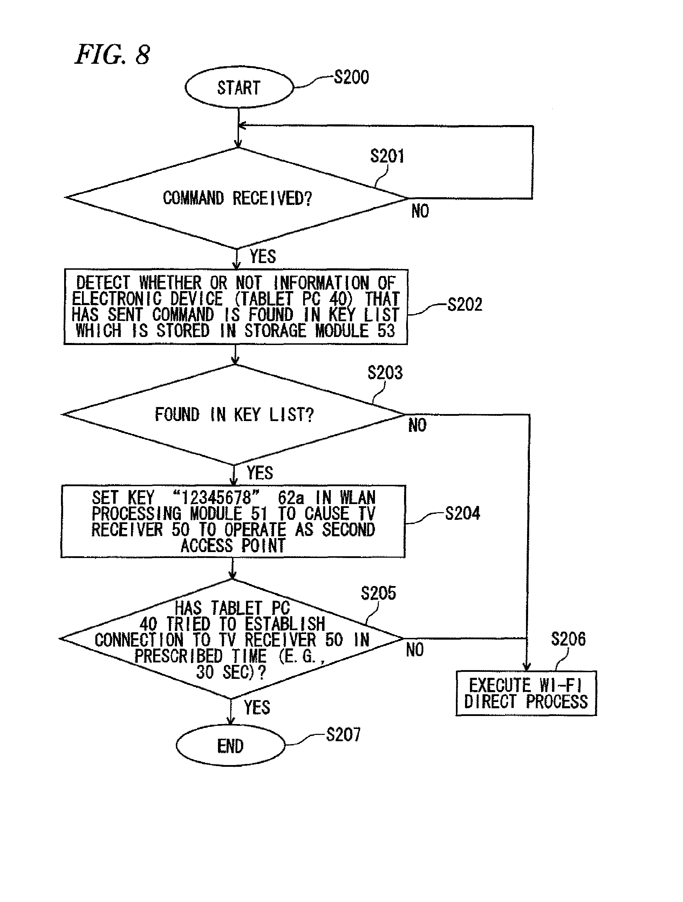

Fig. 8 is a flowchart of a main process which is executed by the TV receiver 50 which is a connection-destination-side electronic device used in the wireless connection system according to the embodiment.

The process is started at step S200. At step S201, the TV receiver 50 as a second electronic device judges whether or not it has received a command generated by a first electronic device (tablet PC 40). If it is judged that the TV receiver 50 has received a command generated by the first electronic device (tablet PC 40), the process moves to step S202 (S201: yes). If not (S201: no), step S201 is executed again.

At step S202, it is detected whether or not information of the electronic device that has sent the command (tablet PC 40, first electronic device) is found in the key list 64 which is stored in the storage module 53. If it is judged that information of the electronic device that has sent the command is found in the key list 64 (S203: yes), the process moves to step S204. If not (S203: no), the process moves to step S206.

At step S204, a key "12345678" 62a, for example, is set in the WLAN processing module 51 (wireless LAN control module) to cause the TV receiver 50 to operate as a second access point.

At step S205, it is judged whether or not the tablet PC 40 (first electronic device) has tried to establish a connection to the TV receiver 50 in a preset, prescribed time (e.g., 30 sec).

At step S206, a Wi-Fi Direct process is executed. In the embodiment, if, for example, a certain electronic device tries to establish a connection to a device that does not support the above-described wireless connection method according to the embodiment, the Wi-Fi Direct process is executed, which prevents an event that no wireless connection is established. The process is finished at step S207.

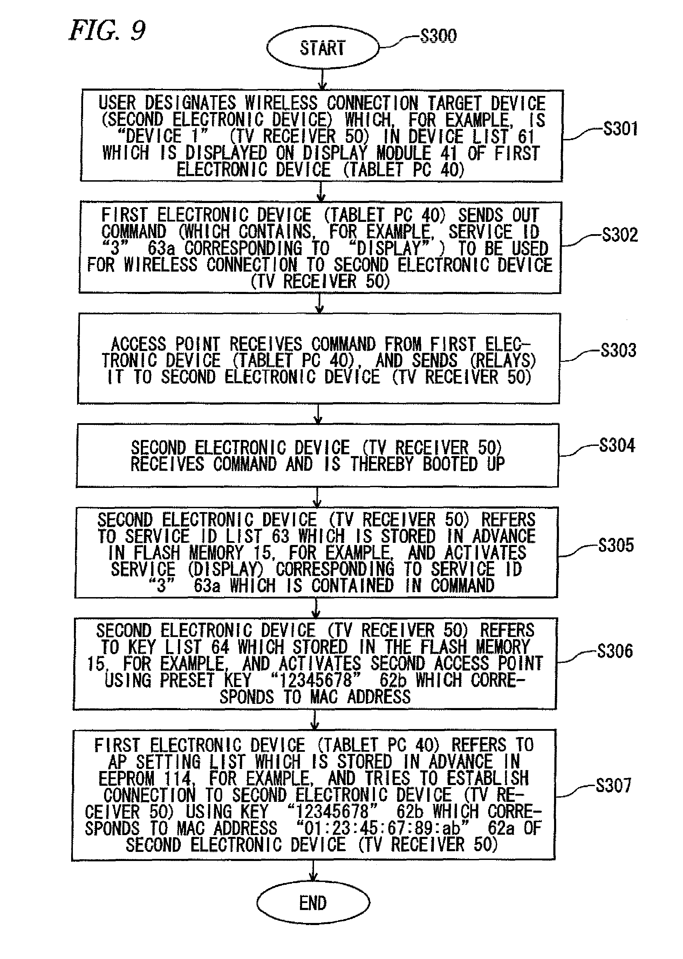

Fig. 9 is a flowchart of a process which is executed by the wireless connection system according to the embodiment.

The process is started at step S300. At step S301, the user designates a wireless connection target device (second electronic device) which is, for example, "device 1" (TV receiver 50) in the device list 61 which is displayed on the display module 41 of a first electronic device (tablet PC 40).

At step S302, the first electronic device (tablet PC 40) sends out a command (which contains, for example, a service ID "3" 63a corresponding to "display") to be used for a wireless connection to the second electronic device (TV receiver 50).

At step S303, the access point 60 receives the command from the first electronic device (tablet PC 40) and sends (relays) it to the second electronic device (TV receiver 50).

At step S304, the second electronic device (TV receiver 50) receives the command and is thereby booted up.

At step S305, the second electronic device (TV receiver 50) refers to the service ID list 63 which is stored in advance in the flash memory 15, for example, and activates a service (display) corresponding to the service ID "3" 63a which is contained in the command.

At step S306, the second electronic device (TV receiver 50) refers to the key list 64 which is stored in the flash memory 15, for example, and activates a second access point using a preset key "12345678" 62b which corresponds to a MAC address.

At step S307, the first electronic device (tablet PC 40) refers to the AP setting list 62 which is stored in advance in the EEPROM 114, for example, and tries to establish a wireless connection to the second electronic device (TV receiver 50) using a key ("12345678" 62b) which corresponds to a MAC address "01:23:45:67:89:ab" 62b of the second electronic device (TV receiver 50). The process is finished at step S308.

As described above, a wireless connection system according to the embodiment has a first electronic device (tablet PC 40) which is equipped with a connection item presenting module display module 41) which presents a connection item (device list 61) in such a manner that the connection item enables commanding of a connection to a second electronic device (TV receiver 50) which can be wirelessly connected to the first electronic device, and a command sending module (wireless LAN controller 112) which, when the connection item is designated, sends out a command to be used for a connection to the second electronic device; an access point (access point 60) which relays, to the second electronic device, the command received from the first electronic device; and the second electronic device which receives the relayed command, activates a second access point using a key (e.g., "12345678" 62b) that is indicated by the command, and is wirelessly connected to the first electronic device after the activation of the second access point.

The first electronic device establishes the connection to the second electronic device using a key (e.g., "12345678" 62b) that is stored in advance and corresponds to a MAC address of the second electronic device.

The key corresponding to the MAC address of the second electronic device is stored in a storage module of the second electronic device in advance.

The second electronic device activates a service indicated by the command on the basis of a correspondence list that is stored in advance.

In the embodiment, a Wi-Fi Direct connection process is executed if a connection is not established between the first electronic device and the second electronic device. As mentioned above, the Wi-Fi Direct had the problem that a considerable time is taken to complete a wireless connection. By virtue of the above-described measures, the embodiment can shorten the time taken to complete a wireless connection.

All the steps of each control process according to embodiment can be implemented by software. Therefore, the advantages of the embodiment can easily be obtained merely by installing programs of the control processes in ordinary computers via computer-readable storage media that are stored with the programs and running the installed programs.

The invention is not limited to the above embodiment itself and, in the practice stage, may be embodied in such a manner that constituent elements are modified in various manners without departing from the spirit and scope of the invention. And various inventive concepts may be conceived by properly combining plural constituent elements disclosed in the embodiment. For example, several ones of the constituent elements of the embodiment may be omitted.

## Claims

1. A wireless connection system comprising:
a first electronic device and a second electronic device configured to be wirelessly connected to the first electronic device, the first electronic device comprising:
a connection item presenting module configured to present a connection item enabling a connection to the second electronic device; and
a command sending module configured to send out a command to be used for a connection to the second electronic device when the connection item is designated;
an access point which relays the command received from the first electronic device to the second electronic device, wherein
the second electronic device receives the relayed command, activates a second access point using a key that is indicated by the command, and is wirelessly connected to the first electronic device after the activation of the second access point.

2. The wireless connection system according to claim 1, wherein
the first electronic device establishes the connection to the second electronic device using a key that is stored in advance and corresponds to a MAC address of the second electronic device.

3. The wireless connection system according to claim 2, wherein
the key corresponding to the MAC address of the second electronic device is stored in a storage module of the second electronic device in advance.

4. The wireless connection system according to claim 1, wherein
the second electronic device activates a service indicated by the command on the basis of a correspondence list that is stored in advance.

5. A first electronic device used in the wireless connection system according to claim 1.

6. A second electronic device used in the wireless connection system according to claim 1.

7. The wireless connection system according to claim 1, wherein
a Wi-Fi Direct connection process is executed if a connection is not established between the first electronic device and the second electronic device.

8. A wireless connection method comprising:
presenting a connection item enabling a connection to a second electronic device which is wirelessly connected to a first electronic device;
causing the first electronic device to send out a command to be used for a connection to the second electronic device when the connection item is designated;
relaying the command transmitted from the first electronic device to the second electronic device; and
causing the second electronic device to receive the relayed command, activate a second access point using a key that is indicated by the command, and be wirelessly connected to the first electronic device after the activation of the second access point.

9. A recording medium for storing a wireless connection control program for controlling a wireless connection system, the wireless connection control program causing the wireless connection system to execute the steps of:
presenting a connection item enabling a connection to a second electronic device which is wirelessly connected to a first electronic device;
causing the first electronic device to send out a command to be used for a connection to the second electronic device when the connection item is designated;
relaying the command transmitted from the first electronic device to the second electronic device; and
causing the second electronic device to receive the relayed command, activate a second access point using a key that is indicated by the command, and be wirelessly connected to the first electronic device after the activation of the second access point.
